(19)

Europäisches
Patentamt
European
Patent Office
Office européen
des brevets

(11) **EP 3 051 659 A1**

(12) **EUROPEAN PATENT APPLICATION**
published in accordance with Art. 153(4) EPC

(43) Date of publication:
**03.08.2016 Bulletin 2016/31**

(21) Application number: **13894915.1**

(22) Date of filing: **26.09.2013**

(51) Int Cl.:
**H02J 7/02** (2006.01)

(86) International application number:
**PCT/JP2013/076008**

(87) International publication number:
**WO 2015/045050 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fuji Electric Co., Ltd.
Kawasaki-shi, Kanagawa 210-9530 (JP)**

(72) Inventor: **HAMADA Yoshitaka
Kawasaki-shi
Kanagawa 210-9530 (JP)**

(74) Representative: **Appelt, Christian W.
Boehmert & Boehmert
Anwaltspartnerschaft mbB
Patentanwälte Rechtsanwälte
Pettenkoferstrasse 20-22
80336 München (DE)**

(54) **PARALLEL MONITOR CIRCUIT FOR CAPACITORS**

(57) A parallel monitoring circuit for a capacitor includes a comparator $CMP_1$ that compares a charge potential $V_{cap}$ of a capacitor $C_1$ with an equalization potential $V_r$, and transistors $Tr_{a1}$, $Tr_{b1}$ which are operated by the output of the comparator and control a charge current such that the charge potential $V_{cap}$ matches the equalization potential $V_r$. The parallel monitoring circuit is provided with voltage dividing resistors $R_{a12}$, $R_{a13}$, $R_{b12}$, $R_{b13}$ that resistively divide and attenuate potentials of two end electrodes of the capacitor, an operational amplifier $AMP_1$ that amplifies a difference between the divided voltages and detects the charge potential $V_{cap}$, and a DA converter 80 that sets the equalization potential $V_r$ as a variable value. The transistors $Tr_{a1}$ and $Tr_{b1}$ are controlled by comparing by the comparator $CMP_1$ the charge potential $V_{cap}$ detected by the operational amplifier $AMP_1$ with the equalization potential $V_r$ set by the DA converter 80. As a result, the equalization charging of a plurality of capacitors connected in series can be performed at an unrestricted desired potential by using a generally used comparator.

Fig. 1

EP 3 051 659 A1

**Description**

TECHNICAL FIELD

The present invention relates to a parallel monitoring circuit that is connected in parallel with a corresponding capacitor from a plurality of capacitors connected in series and controls the charging current thereof to equalize the charge potentials of the capacitors.

BACKGROUND ART

A capacitor charge-discharge system disclosed in Patent Literature 1 is known as the conventional means for equalizing a charge potential of a plurality of electrical double layer capacitors connected in series.

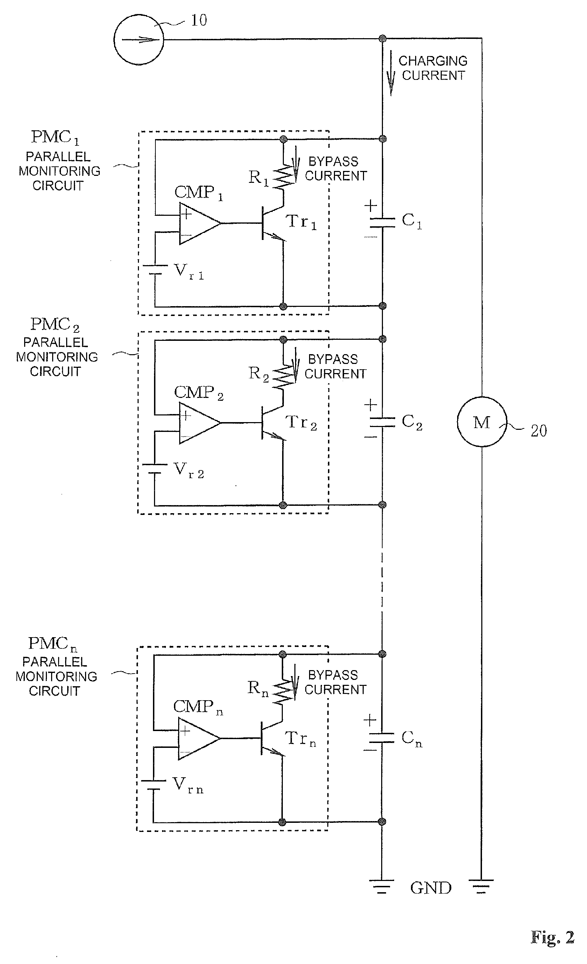

FIG. 2 is a circuit diagram illustrating such charge-discharge system. In FIG. 2, $C_1$, $C_2$, ..., $C_n$ are electrical double layer capacitors connected in series between a charging current source 10 and GND (ground); reference numeral 20 is a load connected in parallel with the series circuit of the electrical double layer capacitors $C_1$, $C_2$, ..., $C_n$; $PMC_1$, $PMC_2$, ..., $PMC_n$ are parallel monitoring circuits of the same configuration which are connected in parallel to respective capacitors; $CMP_1$, $CMP_2$, ..., $CMP_n$ are comparators; $V_{r1}$, $V_{r2}$, ..., $V_{rn}$ are equalization potentials of the capacitors which are provided as reference potentials (usually, $V_{r1} = V_{r2} = ... = V_{rn} = V_r$ and equal to the full charge potential of each capacitor) ; $R_1$, $R_2$, ..., $R_3$ are resistors for current restriction, and $Tr_1$, $Tr_2$, ..., $Tr_n$ are transistors for current bypass.

With such conventional technique, the comparators $CMP_1$, $CMP_2$, ..., $CMP_n$ compare the difference in potentials between the terminals of the capacitors $C_1$, $C_2$, ..., $C_n$, that is, the charge potential of the capacitors $C_1$, $C_2$, ..., $C_n$, with the equalization potential $V_r$. Where the charge potential is less than $V_r$, the transistor is switched OFF, and charging of the capacitor is continued, and where the charge potential is greater than $V_r$, the transistor is switched ON, the charging current is bypassed, and charging of the capacitor is stopped, thereby performing equalization charging of all of the capacitors $C_1$, $C_2$, ..., $C_n$.

In Patent Literature 1, as depicted in FIG. 2, the lower-potential side of each capacitor is connected to an inverting input terminal of each comparator through a voltage source that generates the equalization potential $V_r$, and the upper-potential side of each capacitor is connected to the non-inverting input terminal of each comparator. Such a circuit configuration is disclosed not only in Patent Literature 1, but also in a large number of other literature.

However, in such circuit configuration, the voltage source that generates the equalization potential $V_r$ is needed for each capacitor and the voltage source is not shared. The resultant problem is that the circuit configuration is complex. Further, since the equalization potential $V_r$ has a fixed value, the charge potential cannot be changed and the capacitors cannot be equalization charged to a random value.

A capacitor charge control circuit disclosed in Patent Literature 2 is known as the conventional means for resolving the above-described problems.

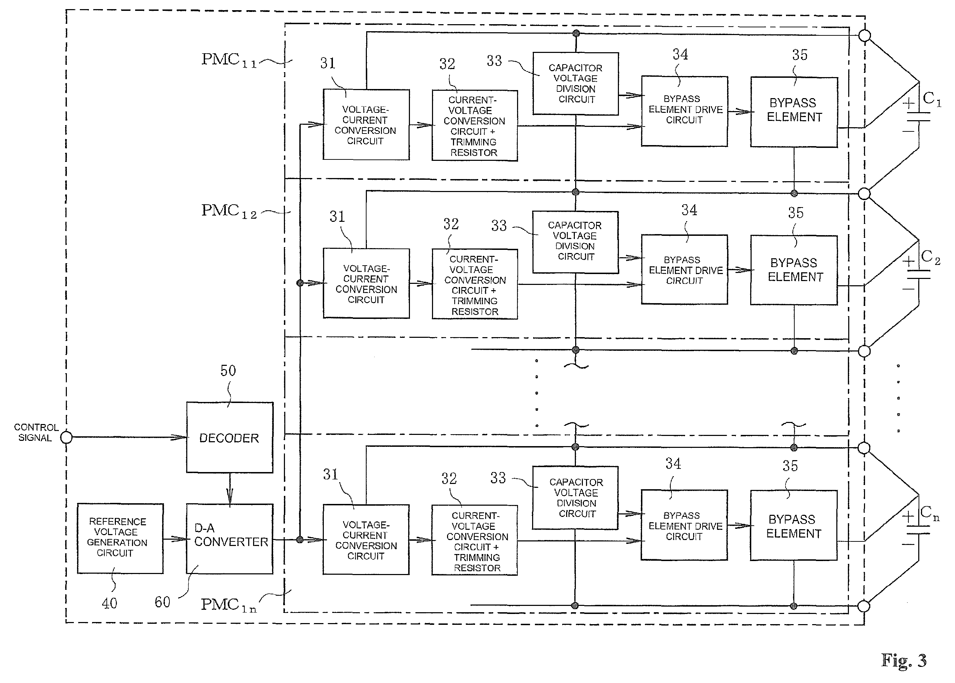

FIG. 3 is a block diagram illustrating such capacitor charge control circuit. In FIG. 3, $PMC_{11}$, $PMC_{12}$, ..., $PMC_{1n}$ are parallel monitoring circuits of the same configuration that are connected in parallel with respective electrical double layer capacitors $C_1$, $C_2$, ..., $C_n$; 31 is a voltage-current conversion circuit; 32 is a current-voltage conversion circuit (trimming resistor); 33 is a capacitor voltage division circuit; 34 is a bypass element drive circuit; 35 is a bypass element; 40 is a reference voltage generation circuit; 50 is a decoder; and 60 is a D-A converter.

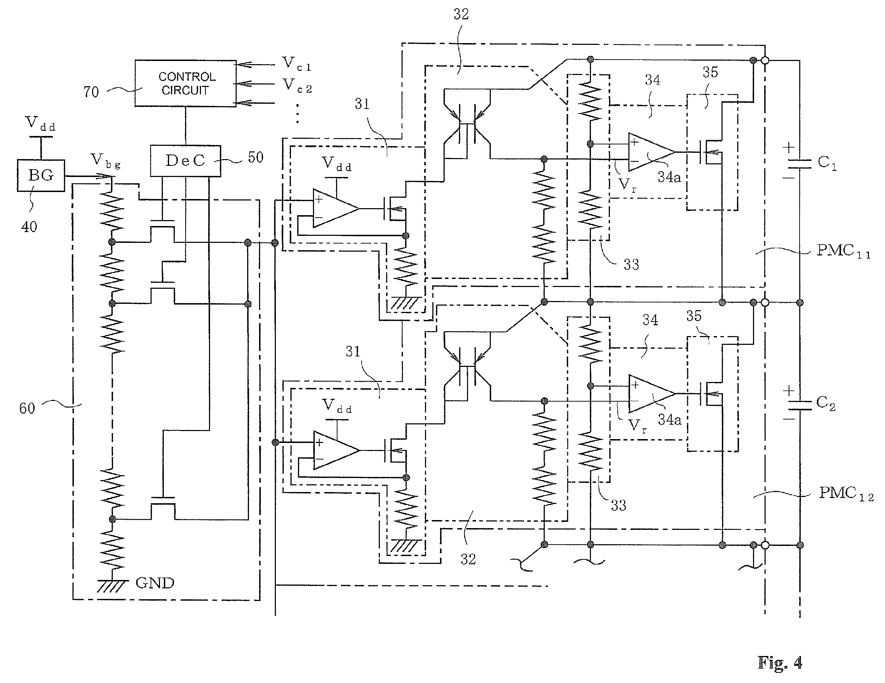

FIG. 4 depicts a specific circuit depicted in FIG. 3; here, 70 is a control circuit generating a control signal which is input to the decoder 50 on the basis of the voltages $V_{c1}$, $V_{c2}$, ... of the capacitors $C_1$, $C_2$, ....

In this conventional configuration, the equalization potential $V_r$ input to a comparator 34a in the bypass element drive circuit 34 can be easily changed by using the DA converter 60. Another advantage is that as a result of providing the voltage-current conversion circuit 31 and the current-voltage conversion circuit 32 before inputting the equalization potential $V_r$ to the comparator 34a, the DA converter 60, which is the source of the equalization potential $V_r$, can be shared by all of the capacitors $C_1$, $C_2$, ..., $C_n$.

Patent Literature 1: Japanese Patent Application Publication No. 2008-271722 (paragraphs [0016] to [0019], FIG. 1, for example)
Patent Literature 2: Japanese Patent Application Publication No. 2008-178202 (paragraphs [0032] to [0042], FIG. 3 and 4, for example)

DISCLOSURE OF THE INVENTION

With the conventional configuration disclosed in Patent Literature 1 (FIG. 2 mentioned hereinabove), the upper-potential side of each capacitor is directly connected to the non-inverting input terminal of the comparator. Therefore, the voltage applied to the non-inverting input terminal is the same as the power supply voltage of the comparator. In particular, where power is supplied from the two end electrodes of each capacitor to the comparator, the voltage applied to the non-inverting input terminal becomes equal to the power supply voltage of the comparator.

In the case of a commonly used comparator, the common-mode input voltage range of at least about 1 V is specified for the power supply voltage. Therefore, where the input voltage is the same as the power supply voltage, unpredictable operation occurs and the device can be damaged. In order to avoid such a problem, it is necessary to select a special comparator of the so-called input rail-to-rail type which can be adapted even to the input voltage substantially equal to the power supply voltage.

Further, where power is supplied not from the two end electrodes of the capacitor, a comparator with a high breakdown voltage should be selected. This is because where power is supplied not from the two end electrodes of the capacitor, since the negative power supply terminal of each comparator is connected to GND (0 V), the highest potential, with respect to the GND (0 V), of a plurality of electrical double layer capacitors, which has been connected in series to increase voltage, differs depending on application and can reach several hundreds of volts in high-voltage applications, and a comparator corresponding to a capacitor close to this highest potential inputs a higher voltage.

Meanwhile, with the conventional configuration disclosed in Patent Literature 2 (FIGS. 3 and 4 mentioned hereinabove), a restriction is placed on the equalization potential which can be set.

The full charge potential per one electrical double layer capacitor is usually about 2 V to 3 V. By contrast, even special devices that can be driven by a low voltage require an operation power supply voltage of the comparator of about 1 V. In Patent Literature 2, for example, where the voltage-dividing resistance values of the capacitor voltage dividing circuit 33 are equal to each other when the capacitors are charged to about 1 V, the input voltage to the comparator is 0.5 V. To prevent the comparator from malfunctioning even in this state, it is necessary to select a special comparator of the input rail-to-rail type in the same manner as in the case described in Patent Literature 1. Further, even when such a special comparator is selected, the operation of the comparator cannot be guaranteed when the charge potential of the capacitor is less than the operation power supply voltage of the comparator.

Therefore, in Patent Literature 2, the equalization potential, which is set for the comparator 34a, is prescribed to be equal to or higher than the operation power supply voltage of the comparator.

Further, in the circuit disclosed in Patent Literature 2, since an N-MOS is used for the voltage-current conversion circuit 31, the equalization potential which is set for the comparator 34a is also prescribed to be equal to or higher than the threshold voltage (usually about 0.6 V to 0.7 V) of the N-MOS.

As described hereinabove, in the conventional configurations disclosed in Patent Literature 1 and 2, a special comparator sometimes needs to be selected for a bypass current, and various restrictions are placed on the lower limit value of the equalization potential. The resultant problem is that equalization charging of a plurality of capacitors cannot be performed at a potential lower than the lower limit value.

Accordingly, an objective to be attained by the present invention is to provide a parallel monitoring circuit that can use generally used comparators and can perform equalization charging of a plurality of serially connected capacitors at the desired potential.

In order to resolve the abovementioned problems, the invention as in claim 1 provides a parallel monitoring circuit for a capacitor, the circuit being connected to both ends of a corresponding capacitor from among a plurality of serially connected capacitors and including comparison means for comparing a charge potential of the capacitor with an equalization potential; and charge current bypass means operated by an output of the comparison means and controlling a charge current of the capacitor such that the charge potential matches the equalization potential.

The specific feature of the present invention is that the parallel monitoring circuit is provided with voltage dividing means for resistively dividing and attenuating a potential of two end electrodes of the capacitor; differential amplification means for amplifying a difference between the divided voltages obtained with the voltage dividing means and detecting the charge potential; and equalization potential setting means for setting the equalization potential as a variable value, wherein the comparison means compares the charge potential detected by the differential amplification means with the equalization potential which has been set by the equalization potential setting means.

The invention as in claim 2 provides the parallel monitoring circuit according to claim 1, wherein the voltage dividing means resistively divides a voltage between a ground potential and the potential of two end electrodes of the respective capacitors.

The invention as in claim 3 provides the parallel monitoring circuit for a capacitor according to claim 1 or 2, wherein a voltage attenuation ratio determined by the voltage dividing means is equal to an inverse value of a voltage amplification ratio in the differential amplification means.

The invention as in claim 4 provides the parallel monitoring circuit for a capacitor according to any one of claims 1 to 3, wherein the equalization potential setting means can set the equalization potential at predetermined magnitude between 0 V and the full charge equivalent value of the capacitor.

The invention as in claim 5 provides the parallel monitoring circuit for a capacitor according to claim 1, wherein the operation power supply voltages of the differential amplification means and comparison means are supplied from a power supply other than the two end electrodes of the capacitor.

In accordance with the present invention, the equalization charging of a plurality of capacitors connected in series can be performed to an unrestricted desired value, without using a special comparator of an input rail-to-rail type or a comparator and an operational amplifier with a high voltage resistance.

BRIEF DESCRIPTION OF THE DRAWINGS

FIG. 1 is a circuit diagram of a parallel monitoring circuit according to an embodiment of the present invention.
FIG. 2 is the circuit diagram of the capacitor charge-discharge system disclosed in Patent Literature 1.
FIG. 3 is the block diagram of the capacitor charge-discharge system disclosed in Patent Literature 2.
FIG. 4 is a specific circuit diagram depicted in FIG. 3.

BEST MODE FOR CARRYING OUT THE INVENTION

An embodiment of the present invention will be explained hereinbelow with reference to the drawings.

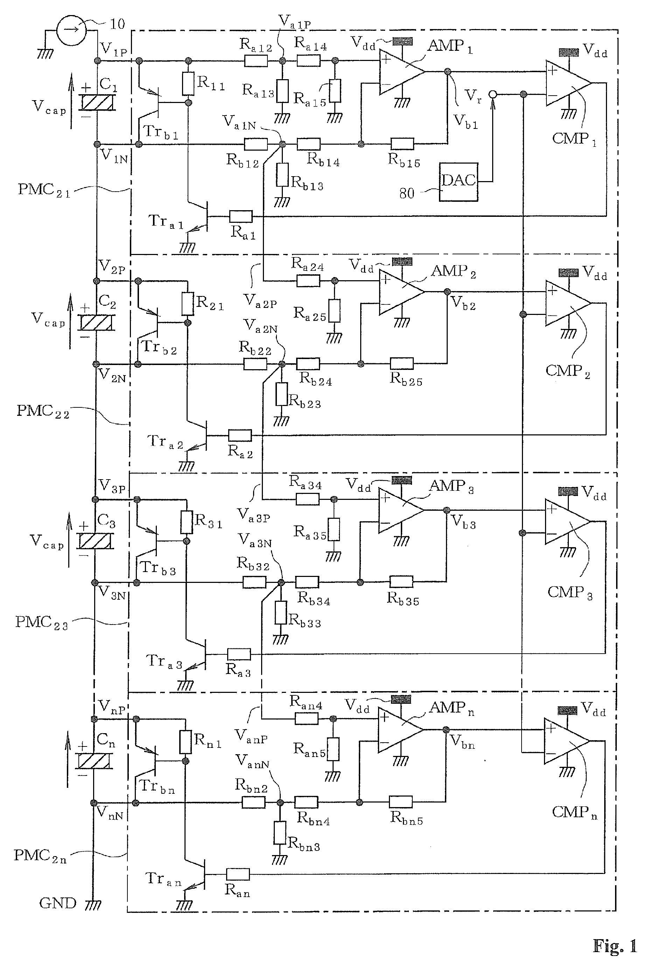

FIG. 1 is a circuit diagram of a parallel monitoring circuit according to the embodiment. In FIG. 1, capacitors such as electrical double layer capacitors $C_1$, $C_2$, $C_3$, ..., $C_n$ are connected in series between a charging current source 10 and GND (ground), and parallel monitoring circuits $PMC_{21}$, $PMC_{22}$, $PMC_{23}$, ..., $PMC_{2n}$ are connected to both ends of the respective capacitors $C_1$, $C_2$, $C_3$, ..., $C_n$.

In this configuration, the charge potentials of all of the capacitors $C_1$, $C_2$, $C_3$, ..., $C_n$ are assumed to be controlled to the same value by the operation of the parallel monitoring circuits $PMC_{21}$, $PMC_{22}$, $PMC_{23}$, ..., $PMC_{2n}$.

Since the parallel monitoring circuits $PMC_{21}$, $PMC_{22}$, $PMC_{23}$, ..., $PMC_{2n}$ have substantially the same configuration, the configuration thereof is explained hereinbelow by considering mainly the parallel monitoring circuit $PMC_{21}$ on the highest potential side by way of example.

In the parallel monitoring circuit $PMC_{21}$, an emitter and a collector of a PNP transistor $Tr_{b1}$ are connected to two end electrodes of the capacitor $C_1$, and a resistor $R_{11}$ is connected between the emitter and a base. A collector and an emitter of a NPN transistor $Tr_{a1}$ are connected between the base of the transistor $Tr_{b1}$ and GND. Here, the transistors $Tr_{b1}$, $Tr_{a1}$ and the below-described resistors $R_{a1}$, $R_{11}$ and the like constitute the charge current bypass means which is set forth in the claims.

The output of a comparator $CMP_1$ is applied through the resistor $R_{a1}$ to the base of the transistor $Tr_{a1}$. An equalization voltage $V_r$ is applied from a DA converter 80 serving as the equalization potential setting means, which is set forth in the claims, to the inverting input terminal of the comparator $CMP_1$. This DA comparator 80 is shared with other parallel monitoring circuits $PMC_{22}$, $PMC_{23}$, ..., $PMC_{2n}$, and the equalization voltage $V_r$ is also applied to the inverting input terminals of the comparators $CMP_2$, $CMP_3$, ..., $CMP_n$.

The connection point of the resistor $R_{11}$ and the emitter of the transistor $Tr_{b1}$ is connected through the series circuit of resistors $R_{a12}$, $R_{a14}$ to the non-inverting input terminal of the operational amplifier $AMP_1$. Further, the connection point of the resistor $R_{a12}$ and the resistor $R_{a14}$ is connected through a resistor $R_{a13}$ to GND, and the non-inverting input terminal of the operational amplifier $AMP_1$ is connected through a resistor $R_{a15}$ to GND.

The collector of the transistor $Tr_{b1}$ is connected through the series circuit of resistors $R_{b12}$, $R_{b14}$, $R_{b15}$ to the output terminal of the operational amplifier $AMP_1$, and the connection point of the resistor $R_{b12}$ and the resistor $R_{b14}$ is connected through the resistor $R_{b13}$ to GND.

The connection point of the resistor $R_{b12}$ and the resistor $R_{b14}$ is connected through the resistor $R_{a24}$ of the parallel monitoring circuit $PMC_{22}$ of the next stage to the non-inverting input terminal of an operational amplifier $AMP_2$. Therefore, the resistors $R_{b12}$, $R_{b13}$ and resistors $R_{a24}$, $R_{a25}$ are connected between the high-potential-side electrode of the capacitor $C_2$ of the next stage and the non-inverting input terminal of the operational amplifier $AMP_2$ and have the same connection relationship as that of the resistors $R_{a12}$, $R_{a13}$ and $R_{a14}$, $R_{a15}$ with respect to the operational amplifier $AMP_1$ of the parallel monitoring circuit $PMC_{21}$.

The same is true for other parallel monitoring circuits $PMC_{23}$, ..., $PMC_{2n}$.

In the parallel monitoring circuits $PMC_{22}$, $PMC_{23}$, ..., $PMC_{2n}$, $Tr_{a2}$, $Tr_{a3}$, ..., $Tr_{an}$ are NPN transistors, $Tr_{b2}$, $Tr_{b3}$, ..., $Tr_{bn}$ are PNP transistors, $AMP_2$, $AMP_3$, ..., $AMP_n$ are operational amplifiers, $CMP_2$, $CMP_3$, ... $CMP_n$ are comparators, and $R_{21}$, $R_{31}$, ..., $R_{n1}$, $R_{a2}$, $R_{a3}$, ..., $R_{an}$, $R_{a24}$, $R_{a25}$, $R_{b22}$, $R_{b23}$, $R_{b24}$, $R_{b25}$, $R_{a34}$, $R_{a35}$, $R_{b32}$, $R_{b33}$, $R_{b34}$, $R_{b35}$, $R_{an4}$, $R_{an5}$, $R_{bn2}$, $R_{bn3}$, $R_{bn4}$, $R_{bn5}$ are resistors.

In the parallel monitoring circuits $PMC_{21}$, $PMC_{22}$, $PMC_{23}$, ..., $PMC_{2n}$, the resistors $R_{a12}$, $R_{a13}$, $R_{b12}$, $R_{b13}$, $R_{b22}$, $R_{b23}$, $R_{b32}$, $R_{b33}$, ..., $R_{bn2}$, $R_{bn3}$ are voltage-dividing resistors for dividing the potential of the two end electrodes of the capacitors $C_1$, $C_2$, $C_3$, ..., $C_n$ with respect to GND (0 V). The resistance values of those voltage-dividing resistors $R_{a12}$, $R_{a13}$, $R_{b12}$, $R_{b13}$, $P_{b22}$, $R_{b23}$, $R_{b32}$, $R_{b33}$, ..., $R_{bn2}$, $R_{bn3}$ may be set such that divided voltages fit into the input voltage range of the operational amplifiers $AMP_1$, $AMP_2$, $AMP_3$, ..., $AMP_n$.

Further, the resistors $R_{a14}$, $R_{a15}$, $R_{b14}$, $R_{b15}$, $R_{a24}$, $R_{a25}$, $R_{b24}$, $R_{b25}$, $R_{a34}$, $R_{a35}$, $R_{b34}$, $R_{b35}$, ..., $R_{an4}$, $R_{an5}$, $R_{bn4}$, $R_{bn5}$ serve to set the amplification ratios of the respective differential amplification circuits, and the resistance values thereof fulfil the following conditions: $R_{a14} = R_{b14}$, $R_{a15} = R_{b15}$, $R_{a24} = R_{b24}$, $R_{a25} = R_{b25}$, ..., $R_{an5} = R_{bns}$.

Further, the resistance values of those resistors $R_{a14}$, $R_{a15}$, ..., $R_{bn4}$, $R_{bn5}$ are made higher than the resistance values of the voltage-dividing resistors $R_{a12}$, $R_{a13}$, $R_{b12}$, $R_{b13}$, $R_{b22}$, $R_{b23}$, $R_{b32}$, $R_{b33}$, ..., $R_{bn2}$, $R_{bn3}$ to a degree such as not to distort the voltages $V_{a1P}$, $V_{a1N}$ ($=V_{a2P}$), $V_{a2N}$ ($=V_{a3P}$), $V_{a3N}$, ..., $V_{a(n-1)N}$ ($=V_{anP}$), $V_{anN}$ appearing at the respective voltage-dividing resistors.

The output voltage $V_{b1}$ of the differential amplification circuit (operational amplifier $AMP_1$) in the parallel monitoring circuit $PMC_{21}$ can be determined from Expression 1.

[Expression 1]

$$V_{b1} = (V_{a1P} - V_{a1N}) \frac{R_{a15}}{R_{a14}}$$

where

$$V_{a1P} = V_{1P} \times \frac{R_{a13}}{R_{a12} + R_{a13}}, \quad V_{a1N} = V_{1N} \times \frac{R_{b13}}{R_{b12} + R_{b13}},$$

$$V_{1P} = V_{1N} + V_{cap}$$

Therefore, where the resistance values of the resistors $R_{a12}$, $R_{a13}$, $R_{a14}$, $R_{a15}$ are determined such as to satisfy Expression (2), the output voltage $V_{b1}$ of the differential amplification circuit becomes equal to the charge potential $V_{cap}$ of the capacitor $C_1$ ($V_{b1} = V_{cap}$). Expression (2) indicates that the voltage attenuation ratio determined by the resistors $R_{a12}$, $R_{a13}$ serving as a voltage dividing means is equal to the inverse value of the voltage amplification ratio in the differential amplification circuit.

[Expression 2]

$$\frac{R_{a13}}{R_{a12} + R_{a13}} \times \frac{R_{a15}}{R_{a14}} = 1$$

Thus, where the resistance values of the resistors $R_{a12}$, $R_{a13}$, $R_{a14}$, $R_{a15}$ are determined such as to satisfy Expression (2), the comparator $CMP_1$ compares the charge potential $V_{cap}$ (voltage $V_{b1}$) of the capacitor $C_1$ with the equalization potential $V_r$.

Further, in this embodiment, $V_{b1} = V_{cap}$ and $V_{cap}$ is usually equal to less than 2 V to 3 V, regardless of the number of capacitors connected in series. Therefore, the power supply voltage $V_{dd}$ of all of the comparators may be, for example, about 5 V even when the common-mode input voltage range is taken into account. This power supply voltage $V_{dd}$ is used commonly also for all of the operational amplifiers.

Concerning the voltage $V_{b1}$ and equalization potential $V_r$ compared by the comparator $CMP_1$, when $V_{b1} < V_r$, both transistors $Tr_{a1}$, $Tr_{b1}$ are OFF. Therefore, the current from the charging current source 10 flows to the capacitor $C_1$, without bypassing, the capacitor $C_1$ is charged and the charge potential $V_{cap}$ approaches the equalization potential $V_r$.

Further, where $V_{b1} \geq V_r$, both transistors $Tr_{a1}$, $Tr_{b1}$ are ON and the current from the charging current source 10 is bypassed. As a result, no current flows to the capacitor $C_1$ and charging is stopped.

Thus, the charge potential $V_{cap}$ of each capacitor $C_1$, $C_2$, $C_3$, ..., $C_n$ depends on the equalization potential $V_r$, and the equalization potential $V_r$ is common for all of the capacitors $C_1$, $C_2$, $C_3$, ..., $C_n$. Therefore, where the equalization potential $V_r$ is variably controlled by the DA converter 80, the charge potential $V_{cap}$ of all of the capacitors $C_1$, $C_2$, $C_3$, ..., $C_n$ can be easily changed.

Further, in the present embodiment, the power supply voltage $V_{dd}$ of the comparators $CMP_2$, $CMP_3$, ..., $CMP_n$, is supplied separately, rather than from the two end electrodes of the capacitors. Therefore, the comparators $CMP_2$, $CMP_3$, ..., $CMP_n$ can operate irrespectively of the charge potential $V_{cap}$ of the capacitors.

Thus, the $V_{cap}$ of each capacitor $C_1$, $C_2$, $C_3$, ..., $C_n$ can be set such as to increase in steps, for example, of 0.1 V, from the state of 0 V, and the capacitors $C_1$, $C_2$, $C_3$, ..., $C_n$ can be equalization charged to the desired value in a range from 0 V to a potential corresponding to a full charge.

INDUSTRIAL APPLICABILITY

The present invention can be used, for example, for equalization charging of various capacitor series circuits such as batteries for electric automobiles configured by connecting in series a plurality of electrical double layer capacitors.

EXPLANATION OF REFERENCE NUMERALS

10: charging current source
80: DA converter
$PMC_{21}$, $PMC_{22}$, $PMC_{23}$, ..., $PMC_{2n}$: parallel monitoring circuits
$C_1$, $C_2$, $C_3$, ..., $C_n$: capacitors
$AMP_1$, $AMP_2$, $AMP_3$, ..., $AMP_n$: operational amplifiers
$CMP_1$, $CMP_2$, $CMP_3$, ..., $CMP_n$: comparators
$Tr_{a1}$, $Tr_{a2}$, $Tr_{a3}$, ..., $Tr_{an}$: NPN transistors
$Tr_{b1}$, $Tr_{b2}$, $Tr_{b3}$, ..., $Tr_{bn}$: PNP transistors
$R_{11.}$ $R_{21}$, $R_{31}$, ..., $R_{n1}$: resistors
$R_{a1}$, $R_{a2}$, $R_{a3}$, ..., $R_{an}$: resistors
$R_{a12}$, $R_{a13}$, $R_{a14}$, $R_{a15}$, $R_{b12}$, $R_{b13}$, $R_{b14}$, $R_{b15}$: resistors
$R_{a24}$, $R_{a25}$, $R_{b22}$, $R_{b23}$, $R_{b24}$, $P_{b25}$: resistors
$R_{a34}$, $R_{a35}$, $R_{b32}$, $R_{b33}$, $R_{b34}$, $R_{b35}$: resistors
$R_{an4}$, $R_{an5}$, $R_{bn2}$, $R_{bn3}$, $R_{bn4}$, $R_{bn5}$: resistors

**Claims**

1. A parallel monitoring circuit for a capacitor, the circuit being connected to both ends of a corresponding capacitor from among a plurality of serially connected capacitors and including: comparison means for comparing a charge potential of the capacitor with an equalization potential; and charge current bypass means operated by an output of the comparison means and controlling a charge current of the capacitor such that the charge potential matches the equalization potential,
the parallel monitoring circuit comprising:

   voltage dividing means for resistively dividing and attenuating potential of two end electrodes of the capacitor;
   differential amplification means for amplifying a difference between the divided voltages obtained by the voltage dividing means and detecting the charge potential; and
   equalization potential setting means for setting the equalization potential as a variable value, wherein
   the comparison means compares the charge potential detected by the differential amplification means with the equalization potential which has been set by the equalization potential setting means.

2. The parallel monitoring circuit for a capacitor according to claim 1, wherein
the voltage dividing means resistively divides a voltage between a ground potential and the potential of two end electrodes of the respective capacitors.

3. The parallel monitoring circuit for a capacitor according to claim 1 or 2, wherein
a voltage attenuation ratio determined by the voltage dividing means is equal to an inverse value of a voltage amplification ratio in the differential amplification means.

4. The parallel monitoring circuit for a capacitor according to any one of claims 1 to 3, wherein the equalization potential setting means can set the equalization potential at predetermined magnitude between 0 V and a full charge equivalent value of the capacitor.

5. The parallel monitoring circuit for a capacitor according to claim 1, wherein the operation power supply voltages of the differential amplification means and comparison means are supplied from a power supply other than the two end electrodes of the capacitor.

EP 3 051 659 A1

Fig. 1

8

Fig. 2

Fig. 3

Fig. 4

## INTERNATIONAL SEARCH REPORT

| International application No. |
|---|
| PCT/JP2013/076008 |

| A. CLASSIFICATION OF SUBJECT MATTER |
|---|
| *H02J7/02*(2006.01)i |

According to International Patent Classification (IPC) or to both national classification and IPC

| B. FIELDS SEARCHED |
|---|

Minimum documentation searched (classification system followed by classification symbols)
H02J7/02

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 8-237861 A (Okamura Laboratory, Inc.), 13 September 1996 (13.09.1996), paragraphs [0003] to [0006], [0018], [0022]; fig. 9 & US 5726552 A | 1–5 |
| Y | JP 5-11796 U (Sawafuji Electric Co., Ltd.), 12 February 1993 (12.02.1993), paragraphs [0005] to [0007]; fig. 1 (Family: none) | 1–5 |
| Y | JP 10-336886 A (Nippon Soken, Inc.), 18 December 1998 (18.12.1998), paragraph [0018]; fig. 3 (Family: none) | 1–5 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 December, 2013 (05.12.13) | 17 December, 2013 (17.12.13) |

| Name and mailing address of the ISA/ | Authorized officer |
|---|---|
| Japanese Patent Office | |

| Facsimile No. | Telephone No. |
|---|---|

Form PCT/ISA/210 (second sheet) (July 2009)

**INTERNATIONAL SEARCH REPORT**

International application No.

PCT/JP2013/076008

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-5697 A  (Ricoh Co., Ltd.), 10 January 2008 (10.01.2008), paragraph [0020]; fig. 1 & JP 2004-336919 A      & US 2004/0251934 A1 & US 2006/0139063 A1 | 5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008271722 A
- JP 2008178202 A